# EUROPÄISCHE PATENTSCHRIFT

(11) **EP 0 939 967 B1**
(45) Veröffentlichungstag und Bekanntmachung des Hinweises auf die Patenterteilung: **23.01.2002**
(21) Anmeldenummer: 97919049.3
(22) Anmeldetag: 09.09.1997
(51) Int. Cl.: H01H 85/044, H01H 85/143, B60R 16/02

(54) **STROMVERTEILUNGSVORRICHTUNG**
VOLTAGE DISTRIBUTION DEVICE
DISPOSITIF DE DISTRIBUTION DE COURANT

(30) Priorität: 22.11.1996 DE 29620424 U; 29.04.1997 DE 29707750 U
(43) Veröffentlichungstag der Anmeldung: 08.09.1999
(73) Patentinhaber: Audio Ohm di Tonani Caterina E.C. S.N.C., 20073 Maiocca di Codogno (IT); Lisa Dräxlmaier GmbH, 84137 Vilsbiburg (DE)
(72) Erfinder: BETTI, Bruno, I-20073 Maiocca di Codogno (IT); NEUHAUSER, Robert, D-84079 Bruckberg (DE)
(74) Vertreter: HOFFMANN - EITLE
(86) Internationale Anmeldenummer: EP9704935
(87) Internationale Veröffentlichungsnummer: WO9824107

(56) Entgegenhaltungen:
- DE-A- 3 044 040
- DE-A- 3 804 916
- DE-U- 9 411 394
- DE-U- 29 520 691
- DE-U- 29 607 130
- US-A- 2 780 696
- US-A- 5 229 739
- US-A- 5 357 184
- PATENT ABSTRACTS OF JAPAN vol. 096, no. 002, 29.Februar 1996 & JP 07 254346 A (SUMITOMO WIRING SYST LTD), 3.Oktober 1995,

## Beschreibung

### Technisches Gebiet

Die Erfindung betrifft eine Stromverteilungsvorrichtung, insbesondere für Kraftfahrzeuge, gemäß dem Oberbegriff des Anspruchs 1 bzw. 6 (siehe US-A-5 357 184).

Mit Stromverteilungsvorrichtungen werden in einem Stromnetz elektrische Ströme verteilt bzw. verzweigt. Um eine Absicherung der Stromverteilung zu erreichen, ist es vorteilhaft, die Stromverteilungsvorrichtung mit Sicherungen zu versehen.

### Stand der Technik

Bisher werden hierfür Schmelzsicherungsbausteine verwendet, die in verschiedenen Standard-Sicherungswerten erhältlich sind und auf ein Stromverteilungsbauteil aufgeschraubt werden. Diese Lösung weist jedoch den Nachteil auf, daß eine Vielzahl von Einzelteilen wie Schrauben, Muttern, Unterlegsscheiben etc. erforderlich ist und die Montage sehr aufwendig ist.

Aus der WO 89/03117 ist eine Kabelschmelzsicherung bekannt. Diese bekannte Schmelzsicherung für Kabel umfaßt neben einem Isoliergehäuse ein einstückiges Metallelement, das über einen Schmelzbereich mit Metall überzogene Steckanschlüsse zum Einstecken in entsprechende Kabelenden miteinander verbindet. Bei dem hieraus bekannten Gegenstand handelt es sich um eine Sicherung, eine Stromverteilung ist hiermit nicht möglich und auch nicht vorgesehen.

### Darstellung der Erfindung

Der Erfindung liegt das technische Problem zugrunde, eine Stromverteilungvorrichtung, insbesondere für Kraftfahrzeuge, die einfach herzustellen ist, sowie ein Verfahren zur Herstellung einer solchen Stromverteilervorrichtung bereitzustellen.

Dieses technische Problem wird erfindungsgemäß von einer Stromverteilungsvorrichtung mit den Merkmalen des Patentanspruchs 1 oder einer Stromverteilungsvorrichtung mit den Merkmalen des Patentanspruchs 6 gelöst. Ferner wird das der Erfindung zugrundeliegende technische Problem durch ein Herstellungsverfahren mit den Merkmalen des Anspruchs 13 oder 14 gelöst.

Eine erfindungsgemäße Stromverteilungsvorrichtung gemäß einer ersten grundlegenden Ausbildung des Erfindungskonzepts weist einen ersten Bereich auf, der aus einem elektrisch leitenden Material besteht und zumindest eine elektrische Anschlußverbindung aufweist. Je nach der Plazierung der Stromverteilungsvorrichtung in einem Stromnetz können an die Anschlußverbindung beispielsweise Stromleitungen, eine Leitung zum Pluspol einer Batterie oder eine Masseleitung angeschlossen sein. Falls die Stromverteilungsvorrichtung beispielsweise an einer Batterie angeordnet ist, kann der Batteriepol auch direkt an der Anschlußverbindung angeschlossen sein. Weiterhin weist eine solche Stromverteilungsvorrichtung mindestens zwei voneinander getrennte zweite Bereiche auf, die ebenfalls aus einem elektrisch leitenden Material bestehen.

Die zweiten Bereiche sind jeweils über brückenartige Schmelzsicherungsbereiche aus einem elektrisch leitenden Material mit dem ersten Bereich verbunden. Jeder brückenartige Schmelzsicherungsbereich ist jeweils nicht-lösbar an den ersten und den zugehörigen zweiten Bereich angeschlossen. Außerdem weist jeder brückenartige Schmelzsicherungsbereich einen entlang eines Längenabschnitts über die Materialdicke und/oder Materialbreite kalibrierten Materialquerschnitt auf. Durch unterschiedliche Kalibrierungen der Materialquerschnitte der brückenartigen Schmelzsicherungsbereiche wird für jeden Schmelzsicherungsbereich der jeweils gewünschte Sicherungswert festgelegt. Die Schmelzsicherungsbereiche können dabei sowohl über eine Variation der Brückenlänge als auch über eine Variation der Materialdicke und/oder Materialbreite kalibriert werden oder über eine Kombination davon.

Die zweiten Bereiche weisen jeweils mindestens eine elektrische Anschlußverbindung auf. Daran können beispielsweise Verzweigungsstromleitungen angeschlossen werden. Ein Anschluß solcher Verzweigungsstromleitungen kann beispielsweise über Crimpanschlußstücke, durch Schweißen, Löten oder auf andere geeignete Weise erfolgen.

Durch die nicht-lösbaren Verbindungen der brückenartigen Schmelzsicherungsbereiche mit dem ersten Bereich und dem jeweils zugehörigen zweiten Bereich entfallen erfindungsgemäß zusätzliche Einzelteile wie Schrauben etc. und die Fertigung der Stromverteilungsvorrichtung wird entsprechend vereinfacht. Dadurch, daß erfindungsgemäß brückenartige Schmelzsicherungsbereiche anstelle herkömmlicher Sicherungsbausteine vorgesehen sind, können die Schmelzsicherungsbereiche vorteilhaft in die Stromverteilungsvorrichtung integriert werden. Damit lassen sich kompakte und gewichtssparende Stromverteilungsvorrichtungen realisieren.

Vorzugsweise sind der erste Bereich und die zweiten Bereiche aus mindestens einem plattenförmigen oder bandförmigen Halbzeug gefertigt. Diese Bereiche können aber auch aus anderen Halbzeugen oder durch andere geeignete Fertigungsverfahren hergestellt werden.

In einer zweckmäßigen Ausführung weisen die brückenartigen Schmelzsicherungsbereiche die gleiche Materialdicke auf wie die an den brückenartigen Schmelzsicherungsbereich angrenzenden Abschnitte des ersten und des zugehörigen zweiten Bereichs oder sie weisen zumindest entlang eines Längenabschnitts eine geringere Materialdicke auf. So können die brückenartigen Schmelzsicherungsbereiche aus einem gleichartigen Halbzeug gefertigt werden wie der erste und die zweiten Bereiche oder sogar aus demselben Halbzeug. Die Schmelzsicherungsbereiche können beispielsweise durch Ausstanzen eines bestimmten Längenabschnitts mit einer bestimmten Materialbreite und gegebenenfalls durch ein zusätzliches Verringern der Materialdicke kalibriert werden.

Es ist günstig, für die brückenartigen Schmelzsicherungsbereiche zumindest entlang der Längenabschnitte, die den kalibrierten Materialquerschnitt aufweisen, einen geschwungenen Verlauf vorzusehen, um so auf baulich kompakte Weise diejenige Brückenlänge zu erhalten, die für die gewünschte Schmelzsicherungscharakteristik erforderlich ist. Ein solcher geschwungener Verlauf kann beispielsweise S-förmig sein. In einer alternativen Ausgestaltung ist auch ein aus geraden Teilabschnitten gebildeter, geknickter Verlauf zweckmäßig. Es kann aber auch ein gerader Verlauf des brückenartigen Schmelzsicherungsbereichs vorgesehen sein.

In einer vorteilhaften Ausführungsform sind der erste Bereich, die zweiten Bereiche und die brückenartigen Schmelzsicherungsbereiche der Stromverteilungsvorrichtung einstückig ausgebildet. Folglich erhält man eine integrale Stromverteilungsvorrichtung, die sich auf ein einziges Bauteil reduziert und bei der aufwendige Montagearbeiten, wie sie bisher beim Aufschrauben von Sicherungsbauelementen erforderlich waren, entfallen. In dieser Ausführungsvariante kann die Stromverteilungsvorrichtung insbesondere aus einem plattenförmigen Halbzeug als Stanz- und Biegeteil realisiert werden, wodurch eine vergleichsweise günstige Fertigung erreicht wird. Bei dem verwendeten Halbzeug kann es sich z.B. um ein Kupferhalbzeug, das auch oberflächenbehandelt sein kann, ein Halbzeug aus einer geeigneten Legierung oder ein als Sandwich aus unterschiedlichen Werkstoffschichten aufgebautes Halbzeug handeln. Eine einstückige Bauweise der Stromverteilungsvorrichtung kann auch mit anderen Halbzeugen oder mit anderen Fertigungsverfahren realisiert werden.

In einer weiteren günstigen Ausführungsform werden die brückenartigen Schmelzsicherungsbereiche als eigene Bauteile vorgefertigt und dann nicht-lösbar mit dem ersten und dem jeweils zugehörigen zweiten Bereich der Stromverteilungsvorrichtung verbunden. So können die brückenartigen Schmelzsicherungsbereiche beispielsweise aus anderen Werkstoffen oder Legierungen hergestellt werden als der erste Bereich und die zweiten Bereiche der Stromverteilungsvorrichtung. Außerdem können die brückenartigen Schmelzsicherungsbereiche separat vom ersten und den zweiten Bereichen gefertigt und kalibriert werden.

In einer vorteilhaften Ausführungsform werden die brückenartigen Schmelzsicherungsbereiche durch plastische Verformung, z.B. durch Verquetschen oder Verstemmen, mit den Materialien des ersten und des jeweils zugehörigen zweiten Bereichs verbunden. In anderen vorteilhaften Ausführungsformen werden die brückenartigen Schmelzsicherungsbereiche durch eine Schweiß-, Löt- oder Nietverbindung mit den Materialien des ersten und des jeweils zugehörigen zweiten Bereichs verbunden. Die brückenartigen Schmelzsicherungsbereiche sind somit nicht-lösbar, d.h. nicht zerstörungsfrei lösbar, an den ersten und den zweiten Bereich der Stromverteilungvorrichtung angeschlossen. Auch bei diesen Ausführungsformen ergibt sich eine erhebliche Reduzierung der Teileanzahl der Stromverteilungsvorrichtung, da Schrauben, Unterlegscheiben etc. wegfallen. Und die Herstellung der nicht-lösbaren Verbindungen der Schmelzsicherungsbereiche mit dem ersten und den zweiten Bereichen der Stromverteilungsvorrichtung kann gut automatisiert werden.

In einer zweckmäßigen Ausgestaltung ist der brückenartige Schmelzsicherungsbereich aus einem plattenförmigen oder bandförmigen Halbzeug gefertigt, beispielsweise einem Halbzeug aus Kupfer, das gegebenenfalls oberflächenbehandelt ist, einem Halbzeug aus einer Legierung oder einem als Sandwich aufgebauten Halbzeug.

Wie aus den obigen Ausführungen hervorgeht, umfaßt die allgemeine, in den Patentansprüchen verwendete Bezeichnung "nicht-lösbar angeschlossen" also auch eine einteilige Ausbildung der verschiedenen Funktionsbereiche der Stromverteilungsvorrichtung. Natürlich ist es auch möglich, innerhalb eines Stromverteiler-Bauteils sowohl einteilige integrale Verbindungen einzelner Bereiche, als auch nachträglich (durch Verpressen, Vernieten etc.) hergestellte Verbindungen einzelner Bereiche vorzusehen.

Je nach den Einbaugegebenheiten für die Stromverteilungsvorrichtung kann diese flach, stufenförmig oder in einer anderen passenden Geometrie ausgebildet sein. Bei einer stufen- bzw. treppenförmigen Gestaltung können die Anschlußverbindungen auf unterschiedlichen Höhenniveaus liegen. Bei einer flachen Gestalt kann die Stromverteilungsvorrichtung im wesentlichen in der Halbzeugebene ausgebildet sein.

Eine weitere Ausgestaltung liegt darin, daß die zweiten Bereiche an ihren Anschlußverbindungen eine geringere Materialdicke aufweisen, damit auch vergleichsweise kleine Anschlußkontaktstücke von Stromleitungen kontaktiert werden können, etwa bei der Verwendung von Crimpanschlußstücken.

Vorzugsweise ist jedem brückenartigen Schmelzsicherungsbereich ein Kontaktfuß am ersten Bereich und ein Kontaktfuß am zugehörigen zweiten Bereich zugeordnet, wobei jeweils die beiden zu einem Schmelzsicherungsbereich gehörigen Kontaktfüße dem Schmelzsicherungsbereich benachbart angeordnet sind und einander gegenüberliegen. Im Falle des Durchschmelzens der brückenartigen Schmelzsicherungsbereiche, z.B. aufgrund eines Kurzschlusses oder einer Überlast, können dann herkömmliche Sicherungsbausteine als Reparatursicherungen an den einander jeweils paarweise gegenüberliegenden Kontaktfüßen angebracht werden, um die durchgeschmolzenen Stellen nach einer Behebung der Fehlerursache wieder zu überbrücken. Solche Reparatursicherungen können je nach Bauart aufgeschraubt, aufgesteckt, geklemmt, federnd kontaktiert oder auf andere Weise angebracht werden. Die Kontaktfüße auf seiten der Stromverteilungsvorrichtung weisen dementsprechend Bohrungen für ein Aufschrauben von Reparatursicherungen, Steckaufnahmen zum Einstecken von Reparatursicherungen oder ähnliche Befestigungseinrichtungen auf.

In einer zweckmäßigen Ausgestaltung ist die Stromverteilungsvorrichtung in einem Gehäuse aus einem isolierenden Material untergebracht. Vorzugsweise weist das Gehäuse im Bereich der brückenartigen Schmelzsicherungsbereiche Sichtfenster auf, um eine Sichtkontrolle der Sicherungsbereiche durchführen zu können.

Gemäß einer zweiten grundlegenden Ausbildung des Erfindungskonzepts weist eine erfindungsgemäße Stromverteilungsvorrichtung einen ersten Bereich auf, der aus einem elektrisch leitenden Material besteht und zumindest eine elektrische Anschlußverbindung aufweist. Wie bei der Ausbildung entsprechend dem ersten Erfindungskonzept können je nach der Plazierung der Stromverteilungsvorrichtung in einem Stromnetz unterschiedliche Stromleitungen an die Anschlußverbindung angeschlossen sein, z.B. eine Leitung zum Pluspol einer Fahrzeug-Batterie. Die Stromverteilungsvorrichtung kann in diesem Fall auch direkt am Batteriegehäuse plaziert sein, so daß der Batterie-Pluspol unmittelbar mit der elektrischen Anschlußverbindung des ersten Bereichs kontaktiert wird.

Weiterhin weist die erfindungsgemäße Stromverteilungsvorrichtung mindestens zwei zweite Bereiche aus einem elektrisch leitenden Material auf, die jeweils zumindest eine elektrische Anschlußverbindung aufweisen. Brückenartige Schmelzsicherungsbereiche, die ebenfalls aus elektrisch leitenden Materialien bestehen, verbinden jeweils die zweiten Bereiche mit dem ersten Bereich. Dabei sind die brückenartigen Schmelzsicherungsbereiche an den ersten Bereich mittels Tiefziehhülsen nicht-lösbar angeschlossen.

Es sind also Tiefziehhülsen ausgebildet, die der Befestigung der Schmelzsicherungsbereiche am ersten Bereich der Stromverteilungsvorrichtung dienen. Die Tiefziehhülsen können dabei am Bauelement, das den ersten Bereich ausbildet, angeordnet sein. Oder es kann jeweils an dem Bauelement, das den brückenartigen Schmelzsicherungsbereich ausbildet, eine Tiefziehhülse vorgesehen sein. Die Tiefziehhülsen werden bei diesen beiden Ausführungsvarianten einstückig durch einen Tiefziehvorgang bzw. einen gleichwertigen plastischen Verformungsvorgang am gewählten Bauelement, d.h. entweder auf seiten des ersten Bereichs oder auf seiten des Schmelzsicherungsbereichs, ausgeformt. Die Verbindung zwischen dem Bauelement, das den ersten Bereich bildet, und dem Bauelement, das den Schmelzsicherungsbereich bildet, erfolgt dann jeweils durch Aufeinanderstecken des einen, mit einer entsprechenden Durchgangsöffnung versehenen Bauelements auf das andere Bauelement mit Tiefziehhülse(n) und durch anschließendes plastisches Verformen des hindurchgesteckten freien Randes der Tiefziehhülse. Durch diese plastische Verformung des freien Tiefziehhülsenrandes wird eine innige, nicht-lösbare und fest aneinander liegende Verbindung zwischen dem ersten Bereich und dem zugehörigen Schmelzsicherungsbereich geschaffen, die auch eine zuverlässige Stromübertragung gewährleistet.

Es ist weiterhin denkbar, auf seiten beider Bauelemente Tiefziehhülsen auszuformen, etwa dadurch, daß ein Befestigungsabschnitt des Bauelements mit Schmelzsicherungsbereich auf das andere Bauelement gelegt wird, welches den ersten Bereich ausbildet, und die beiden Bauelemente unter Ausbildung ineinander plastisch verfließender Tiefziehhülsen miteinander verpreßt werden.

Vorzugsweise sind die Tiefziehhülsen einstückig an den ersten Bereich angeformt und entsprechende Befestigungsabschnitte der brückenartigen Schmelzsicherungsbereiche sind mit dazu passenden, auf die Tiefziehhülsen aufsteckbaren Durchgangsöffnungen versehen. Die freien Ränder der Tiefziehhülsen werden dabei unter Bildung einer Hinterschneidung plastisch auf die aufgesteckten Befestigungsabschnitte der Schmelzsicherungsbereiche verpreßt. Bei dieser Ausführung können die Bauelemente mit den brückenartigen Schmelzsicherungsbereichen einfacher hergestellt werden, da dann sämtliche Tiefziehhülsen am ersten Bereich der Stromverteilungsvorrichtung ausgeformt werden.

In einer anderen bevorzugten Ausführungsform umfaßt der erste Bereich der Stromverteilungsvorrichtung einen Trägerbereich und einen Gegenhalterbereich. Die Tiefziehhülsen sind einstückig an den Trägerbereich angeformt. Die brückenartigen Schmelzsicherungsbereiche sind mit Befestigungsabschnitten versehen. Sowohl diese Befestigungsabschnitte als auch der Gegenhalterbereich weisen jeweils passende, auf die Tiefziehhülsen aufsteckbare Durchgangsöffnungen auf. Die freien Ränder der Tiefziehhülsen werden unter Bildung einer Hinterschneidung plastisch auf die Befestigungsabschnitte der Schmelzsicherungsbereiche und den darauf aufgesteckten Gegenhalter verpreßt. Bei dieser Ausführung wird also die Verbindung noch durch den Gegenhalterbereich verstärkt. Die Befestigungsabschnitte der brückenartigen Schmelzsicherungsbereiche sind also zwischen den Trägerbereich und den Gegenhalterbereich des ersten Bereichs eingeklemmt. Durch Verpressen der am Trägerbereich ausgeformten und durch die Befestigungsabschnitte sowie den Gegenhalterbereich hindurchragenden Tiefziehhülsen werden Gegenhalterbereich, Befestigungsabschnitte und Trägerbereich zusammengedrückt und fixiert.

Vorzugsweise ist bei der zuvor beschriebenen Ausführungsform der Gegenhalterbereich einstückig mit dem Trägerbereich verbunden und durch plastische Verformung auf die Tiefziehhülsen des Trägerbereichs und die darauf aufgesteckten Befestigungsabschnitte der Schmelzsicherungsbereiche geklappt. Der erste Bereich kann also einstückig als Stanz- und Biegeteil hergestellt werden, wobei der Trägerbereich und der Gegenhalterbereich beispielsweise durch Verbindungsstege verbunden sind, an denen dann die Klappung des Gegenhalterbereichs relativ zum Trägerbereich erfolgt. In einer alternativen Ausgestaltung können der Trägerbereich und der Gegenhalterbereich auch als zwei getrennte Bauteile ausgeführt sein, die dann aufeinander gesteckt werden.

In einer günstigen Ausgestaltung sind die zweiten Bereiche einstückig mit den zugehörigen brückenartigen Schmelzsicherungsbereichen ausgebildet. Die zweiten Bereiche können dabei beispielsweise genauso gestaltet sein wie die Befestigungsabschnitte, mit denen die Schmelzsicherungsbereiche am ersten Bereich befestigt sind. Auf diese Weise können dann die Bauteile, die jeweils den Schmelzsicherungsbereich ausbilden, z.B. symmetrisch gestaltet sein, etwa als streifenförmige Bauteile mit zwei Befestigungsabschnitten, zwischen denen die brückenartige Schmelzsicherungs-Sollbruchstelle angeordnet ist. An den freien Befestigungsabschnitten, die vom ersten Bereich abgewandt sind, können dann z.B. direkt die Stromverteilungsleitungen kontaktiert werden, die jeweils durch die Schmelzsicherungsbrücken elektrisch abgesichert sind.

In einer alternativen Ausgestaltung sind die zweiten Bereiche, die der Anschlußkontaktierung von Stromverteilerleitungen dienen, an die brückenartigen Schmelzsicherungsbereiche nicht-lösbar angeschlossen. Der Anschluß der zweiten Bereiche an die Schmelzsicherungsbereiche kann auf die gleiche oder ähnliche Weise erfolgen, wie der Anschluß der Schmelzsicherungsbereiche an den ersten Bereich.

In einer Ausführungsform sind mehrere brückenartige Sicherungsbereiche einstückig ausgebildet, und zwar derart, daß die Befestigungsabschnitte der Schmelzsicherungsbereiche untereinander im Anschlußbereich an den ersten Bereich verbunden sind. Auf diese Weise können mehrere Schmelzsicherungsbereiche zu einem Bauteil zusammengefaßt werden, das dann an den ersten Bereich angeschlossen wird.

In einer vorteilhaften Ausgestaltung können an den ersten Bereich zusätzlich zu den brückenartigen Schmelzsicherungsbereichen ein oder mehrere Anschlußkontaktelemente ebenfalls mittels plastisch verformter Tiefziehhülsen nicht-lösbar angeschlossen sein. Auf diese Weise können parallel zu den über die Schmelzsicherungsbereiche abgesicherten Anschlußmöglichkeiten der Stromverteilungsvorrichtung auch nicht abgesicherte Anschlußmöglichkeiten vorhanden sein. Natürlich können zusätzliche Anschlußmöglichkeiten auch einstückig am ersten Bereich der Stromverteilungsvorrichtung vorgesehen sein.

Durch die erfindungsgemäße Ausbildung von tiefgezogenen oder durch ein gleichartiges Verfahren einstückig ausgeformten hülsenartigen Fortsätzen wird eine innige elektrisch leitende Verbindung von erstem Bereich und Schmelzsicherungsbereichen realisiert, und die Montage der Stromverteilungsvorrichtung wird erheblich vereinfacht. Es entfallen die Schraubverbindungen zwischen dem ersten Bereich und den Schmelzsicherungsbereichen, und damit entfallen auch die zugehörigen Verbindungsteile, wie Schrauben, Muttern, Unterlegscheiben etc., da die hülsenartigen Fortsätze einstückig aus dem Material des zugehörigen Bauteils "ausgezogen" werden. Die erfindungsgemäße Stromverteilungsvorrichtung kann vorteilhaft in einem automatisierten Produktionsablauf hergestellt werden.

Bei der erfindungsgemäßen Stromverteilungsvorrichtung bildet vorzugsweise jede verpreßte Tiefziehhülse gleichzeitig eine Durchgangsöffnung aus. Falls ein brückenartiger Schmelzsicherungsbereich im Betrieb auslöst, d.h. durchschmilzt, kann diese Durchgangsöffnung der zugehörigen Tiefziehhülsenverbindung unmittelbar dafür genutzt werden, um eine Reparatursicherung aufzuschrauben. Es ist jedoch auch denkbar, daß die Tiefziehhülsen einen geschlossenen Boden behalten.

Die Schmelzsicherungsbereiche können auf unterschiedliche bekannte Arten gestaltet und für den jeweils gewünschten Stromsicherungswert kalibriert werden. Ebenso kann die Art der Anschlußverbindung der abgehenden Stromleitungen an die zweiten Bereiche auf unterschiedliche bekannte Art ausgeführt sein. Die erfindungsgemäße Stromverteilungsvorrichtung ist sehr variabel für verschiedene Ausstattungsvarianten, wie sie z.B. bei Kraftfahrzeugen auftreten. In ein Grundbauteil, das über eine Anzahl von Verbindungsstellen in Form von Tiefziehhülsen verfügt, können unterschiedlich viele und auf verschiedene Auslösecharakteristiken kalibrierte brückenartige Schmelzsicherungsbereiche eingesetzt werden, die dann durch das nachfolgende Verpressen der Tiefziehhülsen fest angeschlossen werden.

Die Stromverteilungsvorrichtung kann auch in unterschiedlichen räumlichen Ebenen gestaltet sein, um Anschlußmöglichkeiten auf unterschiedlichen räumlichen Höhenniveaus zu ermöglichen. Weiterhin ist vorgesehen, die Stromverteilungsvorrichtung in einem Isoliergehäuse aufzunehmen.

Es versteht sich von selbst, daß die zuvor erläuterten Tiefziehhülsen auch bei einem Stromverteiler gemäß der ersten grundlegenden Ausbildung des Erfindungskonzepts zur Verbindung der Schmelzsicherungsbereiche mit den ersten und/oder zweiten Bereichen eingesetzt werden können.

Wie bereits erläutert, kommen für die Herstellung der Stromverteilungsvorrichtung entsprechend den beiden obigen Ausbildungen des Erfindungskonzepts unterschiedliche Materialien einschließlich Legierungen oder Materialverbundwerkstoffe in Frage, etwa Kupfer, Zink oder dergleichen. Dabei können die Schmelzsicherungsbereiche und die ersten und zweiten Bereiche aus gleichen oder unterschiedlichen Materialien hergestellt sein. Bei einer einteiligen Ausführungsvariante der Stromverteilungsvorrichtung ist diese vorzugsweise aus Aluminium oder einer Aluminiumlegierung hergestellt, z.B. Aluminium mit den Legierungsnummern 1030, 1035, 1040, 1045, 1050 oder 1050A. Auch bei mehrteilig zusammengesetzten Stromverteilungsvorrichtungen können Aluminiumwerkstoffe eingesetzt werden, beispielsweise auch nur für einzelne Schmelzsicherungsbereiche.

Zur Herstellung einer Stromverteilervorrichtung mit einteiliger Ausbildung der ersten und zweiten Bereiche sowie der Schmelzsicherungsbereiche sind grundsätzlich zwei Verfahren vorteilhaft.

Das erste Herstellungsverfahren gemäß dem Anspruch 13 sieht vor, daß das beispielsweise von einem Coil abgezogene Rohmaterialband im Bereich der zu formenden Schmelzsicherungsbereiche gefräst wird. Nach dem Fräsvorgang erfolgt das Ausstanzen der ersten und zweiten Bereiche sowie der Schmelzsicherungsbereiche. Bei dem Ausstanzvorgang ist gleichzeitig durch Variierung der Breite die Kalibrierung der bereits in der Dicke festgelegten Schmelzsicherungsbereiche gegeben.

Ein sehr ähnliches Herstellungsverfahren ist dadurch gegeben, daß die gewollte Formgebung der ersten und zweiten Bereiche sowie der Schmelzsicherungsbereiche durch Ausstanzen erfolgt. Dann werden die Schmelzsicherungsbereiche in die zur Kalibrierung erforderliche Dicke gepreßt. Daraufhin erfolgt gegebenenfalls ein Nachstanzen der Schmelzsicherungsbereiche, um eine endgültige Kalibrierung der Schmelzsicherungsbereiche durch Variation der Breite vorzunehmen.

Dieses Verfahren hat gegenüber dem erstgenannten Verfahren den Vorteil, daß auch sehr unterschiedliche Sicherungswerte in den Schmelzsicherungsbereichen kalibriert werden können. Das erstgenannte Verfahren hat aber den Vorteil, daß eine leichte Kontrolle der durch Fräsen vorbestimmten Dicke der Schmelzsicherungsbereiche möglich ist.

Beide Herstellungsverfahren sind dahingehend vorteilhaft, daß die Herstellung der Stromverteilungsvorrichtung mit einem als Coil aufgewickelten Rohmaterialband möglich ist, etwa auf einer Durchlaufmaschine mit nebeneinander liegenden Bearbeitungsstationen.

Die Materialauswahl für den einteiligen Stromverteiler erfolgt zweckmäßigerweise im Hinblick auf das Einsatzgebiet wie auch in Abhängigkeit vom Herstellungsverfahren. Beim Herstellungsverfahren, bei dem die Kalibrierung über einen Fräsvorgang erfolgt, ist ein relativ hartes Aluminium vorteilhaft, z.B. mit einer Härte im Bereich von 100-120 HV. Falls die Kalibrierung durch Pressen erfolgt, wird ein weicheres Aluminium bevorzugt, beispielsweise mit einer Härte im Bereich von 20-40 HV.

Aluminium hat sich als sehr vorteilhaft erwiesen, da hiermit in Versuchen sehr günstige Verläufe der Schmelzsicherungscharakteristiken erzielt werden konnten. Dabei vermeidet Aluminium thermische Probleme, die bei Materialien mit einem hohen Schmelzpunkt - etwa bei Kupfer - auftreten können. Zudem bietet Aluminium den Vorteil eines geringen Gesamtgewichts der Stromverteilungsvorrichtung, selbst wenn mit anderen Materialien, wie Kupfer, noch etwas dünnere Bauformen möglich scheinen. Auch im Vergleich zu Zink, einem Material mit einem noch niedrigen Schmelzpunkt als Aluminium, schneidet Aluminium sehr günstig ab, da damit eine deutlich dünnere Bauform mit wesentlich geringerem Gewicht realisiert werden kann.

Zusammenfassend ist festzustellen, daß erfindungsgemäße einteilige Aluminium-Stromverteilungsvorrichtungen günstig herzustellen sind, aufgrund der guten Bearbeitbarkeit des Materials und durch die Möglichkeit einer Herstellung im Durchlaufverfahren. Dabei wird eine gewichtssparende und kompakte Bauform bei sehr guten Schmelzsicherungscharakteristiken erreicht, wobei unterschiedliche Sicherungswerte in einem Stromverteiler realisiert werden können. Zudem können die Anschlußkontakte beliebig ausgestaltet sein, etwa als Löcher, Zungen etc.

Aufgrund des Oxidationsverhaltens von Aluminium ist es zweckmäßig, eine Aluminium-Stromverteilungsvorrichtung mit einer oxidationsverhindernden Beschichtung zu versehen. Eine solche Beschichtung kann auf verschiedene, an sich bekannte Arten erfolgen, z.B. in Form einer Zink-Kupfer-Zinn-Beschichtung, die in hintereinandergeschalteten galvanischen Tauchbädern aufgebracht wird.

Bei den vorgenannten Herstellungsverfahren kann es bei der Vielzahl von zweiten Bereichen vorteilhaft sein, daß die zweiten Bereiche untereinander bis zum Schluß mit Stegen verbunden bleiben, die erst nach Durchführung aller Bearbeitungsschritte entfernt werden. Dadurch wird eine bessere und stabilere Bearbeitung der Stromverteilungsvorrichtungsrohlinge möglich.

### Kurze Beschreibung der Zeichnungen

Im folgenden werden zur weiteren Erläuterung und zum besseren Verständnis mehrere Ausführungsbeispiele der Erfindung unter Bezugnahme auf die beigefügten Zeichnungen näher beschrieben und erläutert. Es zeigt:
- Fig.1: ein Ausführungsbeispiel der erfindungsgemäßen Stromverteilungsvorrichtung in einer perspektivischen Ansicht;
- Fig.2: das Ausführungsbeispiel von Fig.1 in der Draufsicht;
- Fig.3: das Ausführungsbeispiel von Fig.1 in einer Seitenansicht;
- Fig.4: eine Einzelheit von Fig.3 in drei Varianten (X/Y/Z);
- Fig.5: ein weiteres Ausführungsbeispiel der erfindungsgemäßen Stromverteilungsvorrichtung gemäß dem zweiten Erfindungskonzept in einem während der Herstellung auftretenden Zwischenzustand in perspektivischer Darstellung;
- Fig.6: die Stromverteilungsvorrichtung von Fig.5 im fertigen Zustand in perspektivischer Darstellung;
- Fig.7: die Stromverteilungsvorrichtung von Fig.6 in einer Querschnittsdarstellung.

### Beschreibung von Ausführungsbeispielen der Erfindung

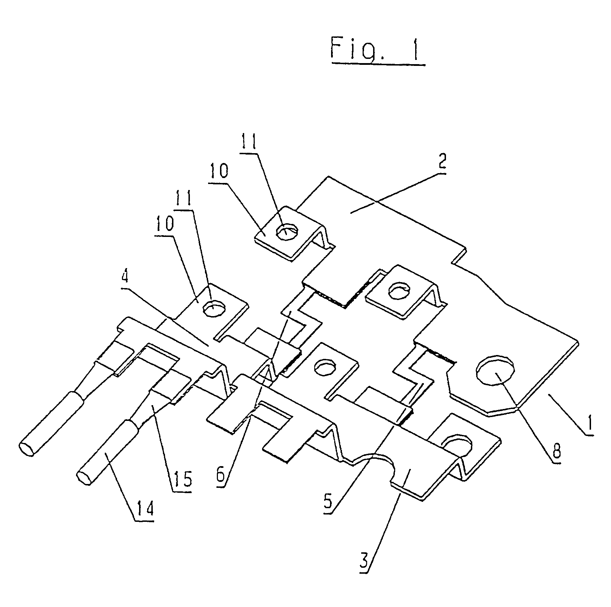

Wie in den Figuren 1 bis 3 dargestellt ist, umfaßt eine Stromverteilungsvorrichtung 1 einen ersten Bereich 2, der im Ausführungsbeispiel an den Pluspol der Batterie eines Kraftfahrzeugs angeschlossen wird. Zum Anschließen einer zum Batterie-Pluspol führenden Stromleitung ist im Bereich 2 eine Öffnung 8 vorgesehen, in der ein entsprechender Anschlußbolzen fixiert wird. Weiterhin umfaßt die Stromverteilungsvorrichtung 1 zweite Bereiche 3 und 4, die voneinander getrennt sind. Die Bereiche 3 und 4 weisen jeweils Anschlußfahnen 7 auf, an die im Ausführungsbeispiel Stromleitungen 14 angeschlossen sind, die die Stromverteilung zu unterschiedlichen Bereichen im Stromnetz vornehmen. Die Anschlußfahnen 7 sind im Ausführungsbeispiel in ihrer Materialdicke im Vergleich zu den zweiten Bereichen 3,4 reduziert, um daran vergleichsweise kleine Kontaktstücke 15 der Stromleitungen 14 anbringen zu können.

Der erste Bereich 2 ist über einen brückenartigen Schmelzsicherungsbereich 5 elektrisch leitend mit dem zweiten Bereich 3 verbunden und über einen weiteren brückenartigen Schmelzsicherungsbereich 6 elektrisch leitend mit dem zweiten Bereich 4 verbunden. Bei Bedarf können weitere zweite Bereiche mit zugehörigen Schnelzsicherungsbrücken vorgesehen sein. Jedem Schmelzsicherungsbereich 5,6 ist ein Paar von Kontaktfüßen 10 zugeordnet. Davon ist jeweils ein Kontaktfuß 10 am ersten Bereich 2 und ein Kontaktfuß 10 am zugehörigen zweiten Bereich 3,4 ausgebildet. Die paarweise zusammengehörigen Kontaktfüße 10 liegen einander gegenüber und liegen benachbart zu dem Schmelzsicherungsbereich 5,6, dem sie zugeordnet sind. Jeder Kontaktfuß 10 ist mit einer Durchgangsöffnung 11 versehen, um daran einen herkömmlichen Sicherungsbaustein anschrauben zu können.

Im Ausführungsbeispiel erfolgt also eine Stromverteilung vom ersten Bereich 2 über die Sicherungsbrücken 5,6 zu den einzelnen zweiten Bereichen 3,4 und den dort angeschlossenen Stromleitungen 14. Auf diese Weise liegt eine Vorsicherung der Stromleitungen in Batterienähe vor. Im weiteren Stromnetz können dann zusätzliche Sicherungen vorgesehen sein. Falls ein brückenartiger Sicherungsbereich 5,6 durchschmilzt, d.h. falls eine Schmelzsicherung 5,6 auslöst, kann nach der Fehlerbehebung ein herkömmlicher Sicherungsbaustein als Reparatursicherung auf dasjenige Paar von Kontaktfüßen 10 aufgeschraubt werden, das der durchgeschmolzenen Sicherungsbrücke zugeordnet ist. So wird die Verbindung zwischen dem ersten und dem betroffenen zweiten Bereich wiederhergestellt und erneut abgesichert.

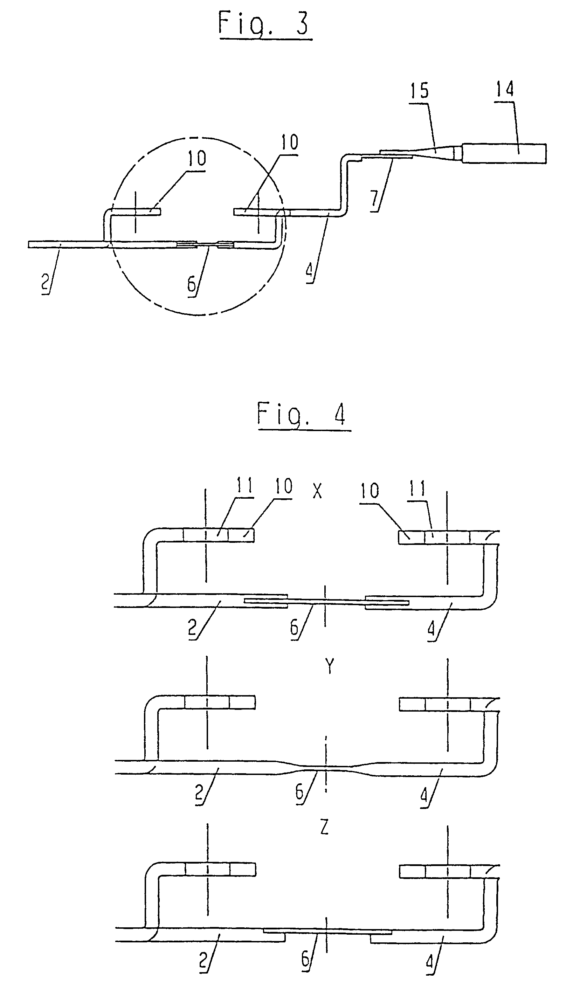

Wie in Fig.3 erkennbar ist, ist die Stromverteilungsvorrichtung 1 in unterschiedlichen gestuften Ebenen ausgebildet. Hinsichtlich der Verbindungart der brückenartigen Schmelzsicherungsbereiche 5,6 mit dem ersten Bereich 2 und den zugehörigen zweiten Bereichen 3,4 sind in Fig.4 verschiedene Varianten als Einzelheit zu Fig.3 dargestellt. In der mittleren Variante Y ist eine einstückige integrale Ausbildung der gesamten Stromverteilungsvorrichtung 1 veranschaulicht. Die Stromverteilungsvorrichtung ist aus einem einzigen plattenförmigen Halbzeug als Stanz- und Biegeteil gefertigt und die brückenartigen Schmelzsicherungsbereiche 5,6 sind entsprechend ausgestanzt und im Ausführungsbeispiel zur Kalibrierung zusätzlich verdünnt, etwa durch einen Preßvorgang. Die obere Variante X zeigt Schmelzsicherungsbereiche 5,6, die separat aus einem plattenförmigen Halbzeug gefertigt und anschließend in die Materialien der ersten und zweiten Bereiche eingepreßt worden sind, um die brückenförmige, elektrisch leitende Verbindung herzustellen. In ähnlicher Weise sind auch bei der unteren Variante Z die Schmelzsicherungsbereiche aufgepreßt worden.

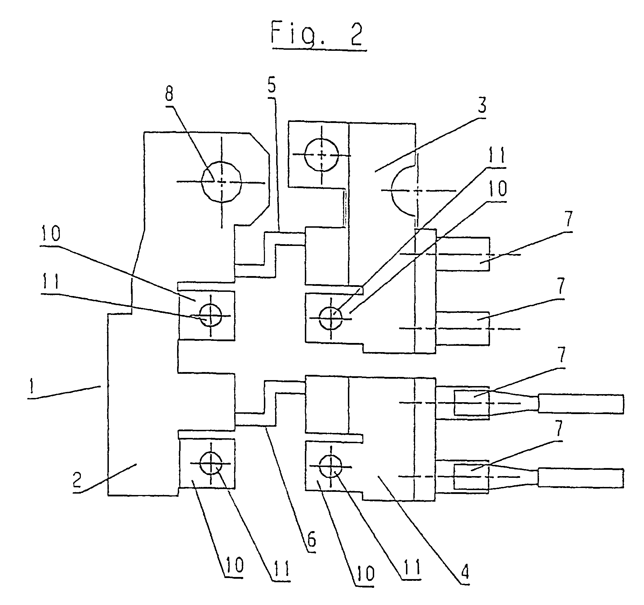

Wie aus Fig.2 hervorgeht, weisen die Schmelzsicherungsbereiche einen geschwungenen Verlauf auf, um eine bestimmte erforderliche Brückenlänge baulich möglichst kompakt unterzubringen.

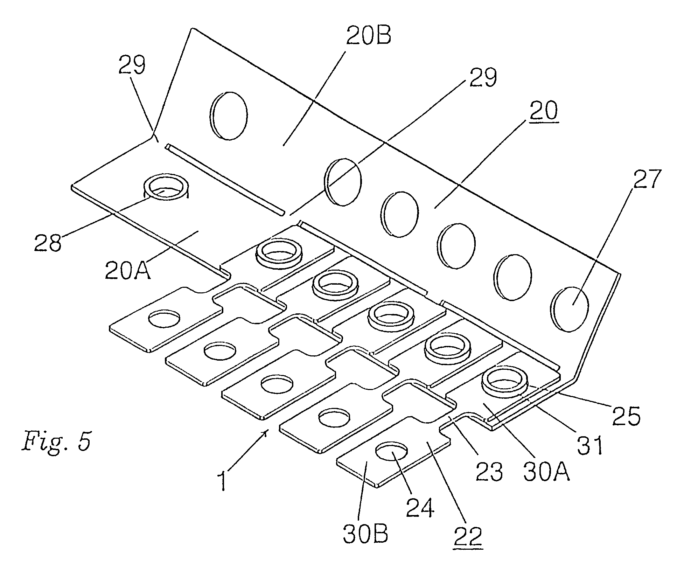

In Fig.5 befindet sich ein erfindungsgemäßer Stromverteiler 1 gemäß dem zweiten Erfindungskonzept noch in einer Zwischenphase während seiner Herstellung.

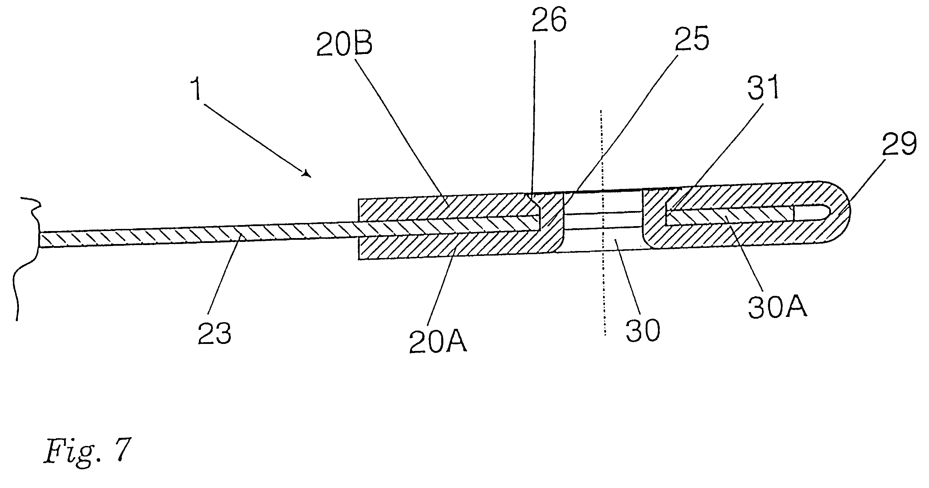

Ein Grundbauteil 20 des Stromverteilers ist aus einem elektrisch leitenden metallischen Werkstoff als Stanz- und Biegeteil gefertigt. Es umfaßt einen plattenförmigen Trägerabschnitt 20A und einen dazu kongruenten plattenförmigen Gegenhalterabschnitt 20B, die einstückig über Verbindungsstege 29 miteinander verbunden sind. Am Trägerabschnitt 20A sind mehrere Hülsenfortsätze 25, 28 einstückig aus dem Werkstoff tiefgezogen. Diese Hülsenfortsätze bilden Durchgangsöffnungen 30 (siehe Fig. 7). Der Gegenhalterabschnitt 20B ist mit Durchgangsöffnungen 27 versehen, die in ihrer Anordnung und ihrem Durchmesser korrespondierend zu den Hülsenfortsätzen 25, 28 ausgebildet sind.

Weiterhin sind streifenförmige Elemente 22 mit brückenartigen Schmelzsicherungsabschnitten 23 vorgesehen. Diese Sicherungsstreifen 22 bilden an ihrem einen Ende Befestigungsabschnitte 30A mit jeweils einer Durchgangsöffnung 31 aus, die passend zum Durchmesser des korrespondierenden Hülsenfortsatzes 25 ausgebildet ist. An ihrem anderen Ende weisen die Sicherungsstreifen 22 Anschlußbereiche 30B auf, die im Beispiel jeweils mit einer Anschlußöffnung 24 versehen sind. Die Sicherungsstreifen 22 sind jeweils aus elektrisch leitenden metallischen Werkstoffen gefertigt.

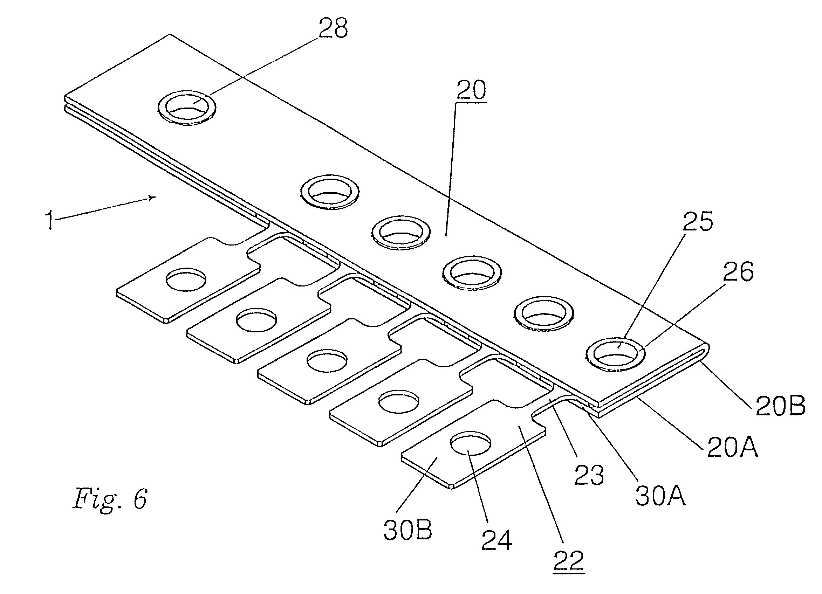

Wie aus Fig.5 ersichtlich ist, werden die Sicherungsstreifen 22 mit der Durchgangsöffnung 31 ihres Befestigungsabschnitts 30A auf den zugehörigen Hülsenfortsatz 25 aufgesetzt. Der Gegenhalterabschnitt 20B wird dann um die Verbindungsstege 29 auf den Trägerabschnitt 20A und die darauf aufgesetzten Sicherungsstreifen 22 geklappt. Fig.5 zeigt eine bereits teilweise geklappte Position des Gegenhalterabschnitts 20B, während Fig.6 und Fig.7 die endgültige Klapposition veranschaulichen, in der Trägerabschnitt 20A, Sicherungsstreifen 22 und Gegenhalterabschnitt 20B aufeinanderliegen.

Dabei greifen die Hülsenfortsätze 25, 28 durch die Durchgangsöffnungen 27 hindurch und ragen zunächst etwas über den Gegenhalterabschnitt 20B hinaus. Diese überstehenden Randbereiche 26 der Hülsenfortsätze 25, 28 werden dann auf den Gegenhalterabschnitt 20B verpreßt, so daß unter Bildung einer Hinterschneidung (vgl. Fig.7) eine zuverlässige und beständige Verbindung des Bauteils 20 mit den Sicherungsstreifen 22 erzielt wird. Durch den Verpreßvorgang kann eine glatte durchgehende Oberfläche von Gegenhalterabschnitt 20B und Hülsenrand 26 realisiert werden.

Der gezeigte Stromverteiler wird über die Anschlußöffnung 28 an einen Anschlußbolzen eines Fahrzeugbatterie-Pluspols angeschlossen. An die Anschlußöffnungen 24 der Sicherungsstreifen 22 werden weiterführende Stromleitungen angeschlossen, etwa mittels passender Anschlußbolzen. So wird also der Bereich 20 unter Zwischenschaltung der Schmelzsicherungsabschnitte 23 elektrisch in mehrere Teilbereiche 30B verzweigt. Natürlich kann dabei im Stromverteiler 1 eine Kombination verschiedener Schmelzsicherungsstreifen 22 mit unterschiedlicher Schmelzsicherungscharakteristik und mit unterschiedlicher Materialzusammensetzung zum Einsatz kommen.

## Patentansprüche

1. Stromverteilungsvorrichtung, insbesondere für Kraftfahrzeuge, mit
- einem ersten Bereich (2) aus einem elektrisch leitenden Material, der zumindest eine elektrische Anschlußverbindung (8) aufweist,
- mindestens zwei voneinander getrennten zweiten Bereichen (3,4) aus einem elektrisch leitenden Material, die jeweils mindestens eine elektrische Anschlußverbindung (7) aufweisen, und
- brückenartigen Schmelzsicherungsbereichen (5,6) aus einem elektrisch leitenden Material, die jeweils die zweiten Bereiche (3,4) mit dem ersten Bereich (2) verbinden und jeweils nicht-lösbar an den ersten und den zugehörigen zweiten Bereich angeschlossen sind,
wobei die brückenartigen Schmelzsicherungsbereiche (5,6) jeweils einen entlang eines Längenabschnitts über die Materialdicke und/oder Materialbreite kalibrierten Materialquerschnitt aufweisen,
**dadurch gekennzeichnet, dass**
- der erste Bereich (2; 20), die zweiten Bereiche (3, 4; 30B) und die Schmelzsicherungsbereiche (5, 6; 23) der Stromverteilungsvorrichtung (1) aus Aluminium oder einer Aluminiumlegierung gefertigt sind.

2. Stromverteilungsvorrichtung nach Anspruch 1, **dadurch gekennzeichnet, daß** der erste Bereich (2), die zweiten Bereiche (3,4) und die brückenartigen Schmelzsicherungsbereiche (5,6) einstückig ausgebildet sind.

3. Stromverteilungsvorrichtung nach Anspruch 1, **dadurch gekennzeichnet, daß** das Material der brückenartigen Schmelzsicherungsbereiche (5,6) durch plastische Verformung mit den Materialien des ersten (2) und des zugehörigen zweiten Bereichs (3,4) verbunden ist.

4. Stromverteilungsvorrichtung nach Anspruch 1, **dadurch gekennzeichnet, daß** das Material der brückenartigen Schmelzsicherungsbereiche (5,6) durch Schweiß- oder Lötverbindungen mit den Materialien des ersten (2) und des zugehörigen zweiten Bereichs (3,4) verbunden ist.

5. Stromverteilungsvorrichtung nach Anspruch 1, **dadurch gekennzeichnet, daß** das Material der brückenartigen Schmelzsicherungsbereiche (5,6) durch Nietverbindungen mit den Materialien des ersten (2) und des zugehörigen zweiten Bereichs (3,4) verbunden ist.

6. Stromverteilungsvorrichtung, insbesondere für Kraftfahrzeuge, mit
- einem ersten Bereich (20) aus einem elektrisch leitenden Material, der zumindest eine elektrische Anschlußverbindung (28) aufweist,
- mindestens zwei voneinander getrennten zweiten Bereichen (30B) aus einem elektrisch leitenden Material, die jeweils zumindest eine elektrische Anschlußverbindung (24) aufweisen, und
- brückenartigen Schmelzsicherungsbereichen (23) aus einem elektrisch leitenden Material, die jeweils die zweiten Bereiche (30B) mit dem ersten Bereich (20) verbinden,
**dadurch gekennzeichnet, dass**
- die brückenartigen Schmelzsicherungsbereiche (23) an den ersten Bereich (20) mittels Tiefziehhülsen (25) nicht-lösbar angeschlossen sind,
- der erste Bereich (2; 20), die zweiten Bereiche (3, 4; 30B) und die Schmelzsicherungsbereiche (5, 6; 23) der Stromverteilungsvorrichtung (1) aus Aluminium oder einer Aluminiumlegierung gefertigt sind.

7. Stromverteilungsvorrichtung nach Anspruch 6, **dadurch gekennzeichnet,**
- **daß** die Tiefziehhülsen (25) einstückig an den ersten Bereich (20) angeformt sind und
- die brückenartigen Schmelzsicherungsbereiche (23) mit Befestigungsabschnitten (30A) versehen sind, die passende, auf die Tiefziehhülsen (25) aufsteckbare Durchgangsöffnungen (31) aufweisen,
- wobei die freien Ränder (26) der Tiefziehhülsen (25) unter Bildung einer Hinterschneidung plastisch auf die aufgesteckten Befestigungsabschnitte (30A) verpreßt sind.

8. Stromverteilungsvorrichtung nach Anspruch 6, **dadurch gekennzeichnet, daß**
- der erste Bereich (20) einen Trägerbereich (20A) und einen Gegenhalterbereich (20B) umfaßt,
- die Tiefziehhülsen (25) einstückig an den Trägerbereich (20A) angeformt sind,
- die brückenartigen Schmelzsicherungsbereiche (23) mit Befestigungsabschnitten (30A) versehen sind,
- der Gegenhalterbereich (20B) sowie die Befestigungsabschnitte (30A) jeweils passende, auf die Tiefziehhülsen (25) aufsteckbare Durchgangsöffnungen (27, 31) aufweisen und
- die freien Ränder (26) der Tiefziehhülsen (25) unter Bildung einer Hinterschneidung plastisch auf die aufgesteckten Befestigungsabschnitte (30A) und den darauf aufgesteckten Gegenhalterbereich (20B) verpreßt sind.

9. Stromverteilungsvorrichtung nach Anspruch 8, **dadurch gekennzeichnet, daß** der Gegenhalterbereich (20B) einstückig (29) mit dem Trägerbereich (20A) verbunden ist und durch plastische Verformung auf die Tiefziehhülsen (25) des Trägerbereichs (20A) mit den darauf aufgesteckten Befestigungsabschnitten (30A) geklappt ist.

10. Stromverteilungsvorrichtung nach einem der Ansprüche 6 bis 9, **dadurch gekennzeichnet, daß** die zweiten Bereiche (30B) einstückig mit den brückenartigen Schmelzsicherungsbereichen (23) ausgebildet sind.

11. Stromverteilungsvorrichtung nach einem der vorhergehenden Ansprüche, **dadurch gekennzeichnet, daß** zumindest die Schmelzsicherungsbereiche mit einer oxidationsverhindernden Beschichtung versehen sind.

12. Verfahren zur Herstellung einer Stromverteilungsvorrichtung nach Anspruch 1, umfassend:
- Fräsen eines aus Aluminium oder einer Aluminiumlegierung bestehenden Materialbands, derart, dass spätere Schmelzsicherungsbereiche der herzustellenden Stromverteilungsvorrichtung in der Dicke in geeigneter Weise kalibriert werden,
- Stanzen des gefrästen Materialbandes derart, dass ein erster Bereich mit zumindest einer elektrischen Anschlussverbindung, mindestens zwei voneinander getrennte zweite Bereiche mit jeweils einer elektrischen Anschlussverbindung und brückenartige Schmelzsicherungsbereiche zwischen den zweiten Bereichen und dem ersten Bereich einstückig ausgebildet werden und die bereits vorgefrästen Schmelzsicherungsbereiche zudem über deren unterschiedliche Breite kalibriert werden.

13. Verfahren zur Herstellung einer Stromverteilungsvorrichtung nach Anspruch 1, umfassend:
- Stanzen eines aus Aluminium oder einer Aluminiumlegierung bestehenden Materialbands, derart, dass ein erster Bereich mit zumindest einer elektrischen Anschlussverbindung, mindestens zwei voneinander getrennte zweite Bereiche mit jeweils einer elektrischen Anschlussverbindung und brückenartige Schmelzsicherungsbereiche zwischen den zweiten Bereichen und dem ersten Bereich einstückig ausgebildet werden,
- Pressen der Schmelzsicherungsbereiche in die zur Kalibrierung erforderliche Dicke.

14. Verfahren nach Anspruch 13, **dadurch gekennzeichnet, daß** ein Nachstanzen der gepreßten Schmelzsicherungsbereiche erfolgt.

15. Verfahren nach Anspruch 13, **dadurch gekennzeichnet, daß** der Preßvorgang für unterschiedliche Schmelzsicherungsbereiche unterschiedlich erfolgt.

16. Verfahren nach Anspruch 12 oder 13, **dadurch gekennzeichnet, daß** beim Ausstanzen des Rohmaterials zwischen den einzelnen zweiten Bereichen Stege stehen gelassen werden, die nach Durchführung der anderen Verfahrensschritte abgetrennt werden.

## Claims

1. Current distribution device, in particular for motor vehicles, having
- a first region (2) made of an electrically conducting material which has at least one electric terminal connection (8),
- at least two regions (3, 4) separated from one another made of an electrically conducting material which each have at least one electric terminal connection (7), and
- bridge-like melting fuse regions (5, 6) made of an electrically conducting material which each connect the second regions (3, 4) to the first region (2) and are each connected non-detachably to the first and the associated second region, the bridge-like melting fuse regions (5, 6) each having a material cross-section calibrated along a section of its length through the thickness and/or width of the material,
**characterised in that**
- the first region (2; 20), the second regions (3, 4; 30B) and the melting fuse regions (5, 6; 23) of the current distribution device (1) are made of aluminium or an aluminium alloy.

2. Current distribution device according to Claim 1,
**characterised in that** the first region (2), the second regions (3, 4) and the bridge-like melting fuse regions (5, 6) are constructed in one piece.

3. Current distribution device according to Claim 1,
**characterised in that** the material of the bridge-like melting fuse regions (5, 6) is connected by plastic deformation to the materials of the first (2) and the associated second region (3, 4).

4. Current distribution device according to Claim 1,
**characterised in that** the material of the bridge-like melting fuse regions (5, 6) is connected by welded or soldered joints to the materials of the first (2) and the associated second region (3, 4).

5. Current distribution device according to Claim 1,
**characterised in that** the material of the bridge-like melting fuse regions (5, 6) is connected by rivet connections to the materials of the first (2) and the associated second region (3, 4).

6. Current distribution device, in particular for motor vehicles, having
- a first region (20) made of an electrically conducting material which has at least one electric terminal connection (28),
- at least two regions (30B) separated from one another made of an electrically conducting material which each have at least one electric terminal connection (24), and
- bridge-like melting fuse regions (23) made of an electrically conducting material which each connect the second regions (30B) to the first region (20),
**characterised in that**
- the bridge-like melting fuse regions (23) are connected non-detachably to the first region (20) by means of deep-drawn sleeves (25),
- the first region (2; 20), the second regions (3, 4; 30B) and the melting fuse regions (5, 6; 23) of the current distribution device (1) are manufactured from aluminium or an aluminium alloy.

7. Current distribution device according to Claim 6,
**characterised in that**
- the deep-drawn sleeves (25) are moulded on in one piece to the first region (20), and
- the bridge-like melting fuse regions (23) are provided with fastening sections (30A) which have matching passage openings (31) capable of being plugged on to the deep-drawn sleeves,
- the free edges (26) of the deep-drawn sleeves (25) being pressed plastically on to the plugged-on fastening sections (30A) with formation of an undercut.

8. Current distribution device according to Claim 6,
**characterised in that**
- the first region (20) comprises a support region (20A) and a counter-support region (20B),
- the deep-drawn sleeves (25) are moulded on in one piece to the support region (20A),
- the bridge like melting fuse regions (23) are provided with fastening sections (30A),
- the counter-support region (20B) together with the fastening sections (30A) each have matching passage openings (27, 31) capable of plugging on to the deep-drawn sleeves (25), and
- the free edges (26) of the deep-drawn sleeves (25) are pressed plastically on to the plugged-on fastening sections (30A) and the counter-support region (20B) plugged on to the latter with formation of an undercut.

9. Current distribution device according to Claim 8,
**characterised in that** the counter-support region (20B) is connected in one piece (29) to the support region (20A) and is folded by plastic deformation on to the deep-drawn sleeves (25) of the support region (20A) with the fastening sections (30A) plugged on to the latter.

10. Current distribution device according to Claims 6 to 9,
**characterised in that** the second regions (30B) are constructed in one piece with the bridge-like melting fuse regions (23).

11. Current distribution device according to one of the preceding claims, **characterised in that** at least the melting fuse regions are provided with a coating inhibiting oxidation.

12. Method for the production of a current distribution device according to Claim 1, comprising
- milling of a band of material composed of aluminium or an aluminium alloy in such a way that later melting fuse regions in the current distribution device to be produced are suitably calibrated in thickness,
- stamping of the milled band of material in such a way that a first region having at least one electric terminal connection, at least two second regions separated from one another each having an electric terminal connection and bridge-like melting fuse regions between the second regions and the first region are constructed in one piece and the already previously milled melting fuse regions are additionally calibrated through their different width.

13. Method for the production of a current distribution device according to Claim 1, comprising
- stamping of a band of material composed of aluminium or an aluminium alloy in such a way that a first region having at least one electric terminal connection, at least two second regions separated from one another each having an electric terminal connection and bridge-like melting fuse regions between the second regions and the first region are constructed in one piece,
- pressing of the melting fuse regions into the thickness required for calibration.

14. Method according to Claim 13, **characterised in that** subsequent stamping of the pressed melting fuse regions takes place.

15. Method according to Claim 13, **characterised in that** the pressing operation takes place differently for different melting fuse regions.

16. Method according to Claim 12 or 13, **characterised in that** when the raw material is stamped out webs are left standing between the individual second regions which after the other steps of the method have been carried out are removed.

## Revendications

1. Dispositif de distribution de courant, en particulier pour des automobiles, comportant
- une première zone (2) en un matériau conducteur d'électricité qui présente au moins un raccordement électrique (8),
- au moins deux secondes zones (3, 4) séparées l'une de l'autre en un matériau conducteur d'électricité, lesquelles présentent chacune au moins un raccordement électrique (7) et des zones de fusibles (5, 6) en forme de pont en un matériau conducteur d'électricité, lesquelles à chaque fois raccordent les deuxièmes zones (3, 4) avec la première zone (2) et à chaque fois sont raccordées de façon indétachable à la première zone et à la deuxième zone correspondante,
où les zones de fusibles (5, 6) en forme de pont présentent chacune une section transversale calibrée le long d'une section longitudinale sur l'épaisseur de matériau et/ou sur la largeur de matériau,
**caractérisé en ce que**
- la première zone (2, 20), les deuxièmes zones (3, 4 ; 30B) et les zones de fusibles (5, 6 ; 23) du dispositif de distribution de courant (1) sont réalisées en aluminium ou en un alliage d'aluminium.

2. Dispositif de distribution de courant selon la revendication 1 **caractérisé en ce que** la première zone (2), les deuxièmes zones (3, 4) et les zones de fusibles (5, 6) en forme de pont sont formées d'une seule pièce.

3. Dispositif de distribution de courant selon la revendication 1 **caractérisé en ce que** le matériau des zones de fusibles (5, 6) en forme de pont est relié par déformation plastique avec les matériaux de la première zone (2) et des deuxièmes zones (3, 4) correspondantes.

4. Dispositif de distribution de courant selon la revendication 1 **caractérisé en ce que** le matériau des zones de fusibles (5, 6) en forme de pont est relié par des soudures ou par des jonctions par brasage avec les matériaux de la première zone (2) et des deuxièmes zones (3, 4) correspondantes.

5. Dispositif de distribution de courant selon la revendication 1 **caractérisé en ce que** le matériau des zones de fusibles (5, 6) en forme de pont est relié par des assemblages rivés aux matériaux de la première zone (2) et des deuxièmes zones (3, 4) correspondantes.

6. Dispositif de distribution de courant en particulier pour des automobiles comportant
- une première zone (20) en un matériau conducteur d'électricité qui présente au moins un raccordement électrique (28),
- au moins deux secondes zones (30B) séparées l'une de l'autre en un matériau conducteur d'électricité, lesquelles présentent chacune au moins un raccordement électrique (24) et des zones de fusibles (23) en forme de pont en un matériau conducteur d'électricité, lesquelles à chaque fois relient les deuxièmes zones (30B) avec la première zone (20),
**caractérisé en ce que**
- les zones de fusibles (23) en forme de pont sont raccordées à la première zone (20) à l'aide de manchons emboutis (25) indétachables,
- la première zone (2, 20), les deuxièmes zones (3, 4 ; 30B) et les zones de fusibles (5, 6 ; 23) du dispositif de distribution de courant (1) sont réalisées en aluminium ou en un alliage d'aluminium.

7. Dispositif de distribution de courant selon la revendication 6 **caractérisé en ce que**
- les manchons emboutis (25) forment une seule pièce avec la première zone (20) et
- les zones de fusibles (23) en forme de pont sont munies de parties de fixation (30A) qui présentent des ouvertures de passage (31) ajustées et qu'on peut adapter sur les manchons emboutis (25),
- où les bords libres (26) des manchons emboutis (25) sont pressés plastiquement en formant une contre-dépouille sur les parties de fixation (30A) qui y sont adaptées.

8. Dispositif de distribution de courant selon la revendication 6 **caractérisé en ce que**
- la première zone (20) comprend une zone de support (20A) et une zone de maintien opposée (20B),
- les manchons emboutis (25) forment une seule pièce avec la zone de maintien opposée (20B),
- les zones de fusibles (23) en forme de pont sont munies de parties de fixation (30A),
- la zone de maintien opposée (20B) ainsi que les parties de fixation (30A), présentent chacune des ouvertures de passage (27, 31) appropriées et qu'on peut adapter sur les manchons emboutis (25) et
- où les bords libres (26) des manchons emboutis (25) sont pressés plastiquement en formant une contre-dépouille sur les parties de fixation (30A) qui y sont adaptées et sur la zone de maintien opposée (20B) qui y est adaptée.

9. Dispositif de distribution de courant selon la revendication 8 **caractérisé en ce que** la zone de maintien opposée (20B) est reliée d'un seul tenant (29) avec la zone de support (20A) et est rabattue par une déformation plastique sur les manchons emboutis (25) de la zone de support (20A) avec les parties de fixation (30A) qui y sont adaptées.

10. Dispositif de distribution de courant selon l'une des revendications 6 à 9 **caractérisé en ce que** les deuxièmes zones (30B) sont formées d'une seule pièce avec les zones de fusibles (23) en forme de pont.

11. Dispositif de distribution de courant selon l'une des revendications précédentes **caractérisé en ce qu'**au moins les zones de fusibles sont munies d'un revêtement antioxydant.

12. Procédé pour la fabrication d'un dispositif de distribution de courant selon la revendication 1 comprenant
- un fraisage d'une bande de matériau en aluminium ou en un alliage d'aluminium réalisé de telle façon que les zones de fusibles ultérieures sont calibrées dans l'épaisseur d'une façon appropriée,
- un découpage de la bande de matériau réalisé de telle façon qu'une première zone comportant au moins un raccordement électrique, au moins deux deuxièmes zones séparées l'une de l'autre comportant chacune un raccordement électrique et une zone de fusibles en forme de pont entre les deuxièmes zones et la première zone soient formées en une seule pièce et que les zones de fusibles déjà préfraisées soient en outre calibrées selon leurs différentes largeurs.

13. Procédé pour la fabrication d'un dispositif de distribution de courant selon la revendication 1 comprenant
- le découpage d'une bande de matériau en aluminium ou en un alliage d'aluminium réalisé de telle façon qu'une première zone comportant au moins un raccordement électrique, au moins deux deuxièmes zones séparées l'une de l'autre comportant chacune un raccordement électrique et une zone de fusibles en forme de pont entre les deuxièmes zones et la première zone soient formées en une seule pièce,
- l'étampage des zones de fusibles dans l'épaisseur nécessaire à la calibration.

14. Procédé selon la revendication 13 **caractérisé en ce qu'**on réalise un découpage ultérieur de la zone de fusible étampée.

15. Procédé selon la revendication 13 **caractérisé en ce que** le processus d'étampage est réalisé de différentes façons pour différentes zones de fusible.

16. Procédé selon la revendication 12 ou 13 **caractérisé en ce que** lors du découpage du matériau brut on laisse subsister entre chacune des deuxièmes zones des parties qu'on retire après l'exécution des autres étapes du procédé.
